# EUROPÄISCHE PATENTSCHRIFT

(11) **EP 2 778 170 B1**
(45) Veröffentlichungstag und Bekanntmachung des Hinweises auf die Patenterteilung: **15.11.2017**
(21) Anmeldenummer: 14155343.8
(22) Anmeldetag: 17.02.2014
(51) Int. Cl.: C07F 9/09, C08J 5/00, G02B 5/00

(54) **Phosphorsäureester, ihre Herstellung und Verwendung**
Phosphoric acid esters, their preparation and use
Esters d'acide phosphorique, leur fabrication et leur utilisation

(30) Priorität: 15.03.2013 DE 102013204605
(43) Veröffentlichungstag der Anmeldung: 17.09.2014
(73) Patentinhaber: Evonik Degussa GmbH, 45128 Essen (DE)
(72) Erfinder: Trosin, Annika, 45665 Recklinghausen (DE); Kruczek, Sabina, 45276 Essen (DE); Schubert, Frank, 47506 Neukirchen-Vluyn (DE); Brötzmann, Andre, 45130 Essen (DE); Favresse, Philippe, 40880 Ratingen (DE); Peggau, Joerg, 45357 Essen (DE)

(56) Entgegenhaltungen:
- DATABASE CA [Online] CHEMICAL ABSTRACTS SERVICE, COLUMBUS, OHIO, US; HAYASHI, YUKIO ET AL: "Anticorrosion treatment of iron and steel materials", XP002726022, gefunden im STN Database accession no. 1972:27490 & JP 46 009923 B (MITSUBISHI HEAVY INDUSTRIES, LTD.) 13. März 1971 (1971-03-13)

## Beschreibung

### Gebiet der Erfindung

Gegenstand der Erfindung sind Phosphorsäureester von polyethermodifizierten Alkylalkoholen, ihre Herstellung und eine Verwendung von Phosphorsäureestern von polyethermodifizierten Alkylalkoholen zur Erzeugung von Glanz auf einer Oberfläche.

### Stand der Technik

Konventionelle Glanzadditive für Reinigungsformulierungen für harte Oberflächen basieren auf Zusätzen von Wachs / Acrylpolymer, die eine Reinigung nicht unterstützen. Eine solche Kombination hinterlässt einen festen Film. der zum einen die Oberfläche verschließt und zum anderen durch unterschiedliche mechanische Beanspruchung zu sichtbaren Laufstraßen führen kann. Unebene Oberflächen werden hierdurch geglättet, und es wird zwar ein Glanz erzeugt, jedoch wird auch die Oberfläche in ihrer Eigenschaft sichtbar verändert. In den meisten Fällen sehen hiermit behandelte gerade mattere bzw. strukturierte Oberflächen lackiert und nicht aufgefrischt und neuwertig aus. JP46009923B offenbart Verbindungen zur Erzeugung von Glanz auf einer Oberfläche. Die EP0940406 beschreibt Phosphorsäureester,
a) welche durch Umsetzung eines ω-hydroxyfunktionellen Oligo- oder Poly(alkyl)styrols mit einem Alkylenoxid zu einem Poly(alkyl)styrol-block(b)-Polyalkylenoxid-Copolymeren und anschließender Überführung in die entsprechenden Phosphorsäureester mit einer Phosphorsäureesterbildenden Phosphorverbindung erhältlich sind, wobei bis zu 100 % der terminalen Hydroxylgruppen dieser Poly(alkyl)styrol-block(b)-Polyalkylenoxid-Copolymeren zu Phosphorsäureestergruppen umgesetzt werden und die Phosphoratome, abhängig von den gewählten stöchiometrischen Verhältnissen, ein- und/oder zweifach verestert werden, und
b) basierend auf Polystyroloxid-block(b)-Polyalkylenoxid-Copolymeren, welche ausgehend von einem monofunktionellen Startalkohol durch sequentielle Anlagerung von Styroloxid und einem Alkylenoxid gemäß der gewünschten Abfolge und Kettenlänge der einzelnen Segmente erhältlich sind und nachfolgend zu den entsprechenden Phosphorsäureestern, wie in a) beschriebener Weise, umgesetzt werden sowie ihre Verwendung als Dispergiermittel für Pigmente und Füllstoffe.

Die EP1167452 beschreibt die Verwendung besonderer Phosphorsäureester, welche auf Polystyrolblock (b)-polyalkylenoxid-Copolymeren basieren, als Emulgatoren und Dispergiermittel für Pigmente und Füllstoffe.

Aufgabe der Erfindung war es, Glanzadditive bereitzustellen, die in geringer Konzentration in einer reinigenden Formulierung Wirkung entfalten.

### Beschreibung der Erfindung

Überraschenderweise wurde gefunden, dass die im Folgenden beschriebenen Phosphorsäureester die der Erfindung gestellte Aufgabe zu lösen vermögen.

Gegenstand der vorliegenden Erfindung sind daher Phosphorsäureester wie in Anspruch 1 beschrieben
Ein weiterer Gegenstand der Erfindung ist ein verfahren zur Herstellung der erfindungsgemäßen Phosphorsäureester.
Noch ein Vorteil ist die Verwendung von Phosphorsäureester von polyethermodifizierten Alkylalkoholen zur Erzeugung von Glanz auf einer Oberfläche

Ein Vorteil der Erfindung ist es, dass die Phosphorsäureester bereits in geringen Konzentrationen einen Glanzeffekt hervorrufen.
Ein weiterer Vorteil der Erfindung ist es, dass die Phosphorsäureester keinen schmierenden bzw. irisierenden Effekt auf der Oberfläche hinterlassen.
Noch ein Vorteil der Erfindung ist es, dass die Phosphorsäureester in hartem Wasser eingesetzt werden können.
Ein weiterer Vorteil der Erfindung ist es, dass die Phosphorsäureester die Fleckenbildung auf Oberflächen bei Trocknung von Formulierungen reduzieren. Noch ein Vorteil der Erfindung ist es, dass die Phosphorsäureester in wässrigen, insbesondere tensidischen Formulierungen eine sehr gute Stabilität aufweisen.
Ein weiterer Vorteil der Erfindung ist es, dass die Phosphorsäureester sehr gut in wässrige Formulierungen einzuarbeiten sind, ohne vorteilhafte Eigenschaften der wässrigen Formulierungen maßgeblich zu beeinflussen.

Die erfindungsgemäßen Phosphorsäureester sowie Formulierungen, die die erfindungsgemäßen Phosphorsäureester enthalten, werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden im Rahmen der vorliegenden Erfindung Verbindungen, wie z. B. Polyether, beschrieben, die verschiedene Einheiten mehrfach aufweisen können, so können diese statistisch verteilt (statistisches Oligomer) oder geordnet (Blockoligomer) in diesen Verbindungen vorkommen. Angaben zu Anzahl von Einheiten in solchen Verbindungen sind als Mittelwert, gemittelt über alle entsprechenden Verbindungen zu verstehen. Alle angegebenen Prozent (%) sind, wenn nicht anders angegeben, Massenprozent.

Vorliegend beansprucht werden somit
Phosphorsäureester der allgemeinen Formel 1 oder ihre Salze 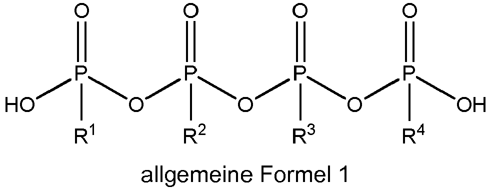 mit R¹, R², R³ und R⁴, gleich oder verschieden, ausgewählt aus R-O-(SO)ₐ-(EO)_{b}-(PO)_{c}-(BO)_{d}- und OH, mit
SO = 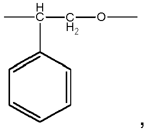
EO = -CH₂-CH₂-O-,
PO = -CH(CH₃)-CH₂-O- und
BO = -CH(CH₂CH₃)-CH₂-O- und
mit der Maßgabe, dass mindestens einer, bevorzugt mindestens 2, insbesondere 3, besonders bevorzugt 4 der Reste R¹, R², R³ und R⁴ ungleich OH,
wobei
a = 2,2 bis 10, bevorzugt 2,5 bis 7, besonders bevorzugt 3 bis 5,
b = 3 bis 20, bevorzugt 4 bis 15, besonders bevorzugt 8 bis 12,
c = 0 bis 10, insbesondere 0,
d = 0 bis 10, insbesondere 0 und
R ausgewählt aus verzweigten oder linearen, gesättigten oder ungesättigten Alkylresten mit 8 bis 20 Kohlenstoffatomen, bevorzugt lineare, gesättigte mit 8 bis 16, insbesondere 10 bis 14, Kohlenstoffatomen.
In Abhängigkeit des pH-Wertes der die erfindungsgemäßen Phosphorsäureester Umgebung können die erfindungsgemäßen Phosphorsäureester auch in partiell oder vollständig neutralisierter Form als Salze vorliegen. Als Gegenionen seien hier insbesondere Alkali- und Erdalkalimetallionen sowie gegebenenfalls substituierte Ammoniumionen genannt.
R kann in den Resten R¹, R², R³ und R⁴ ungleich oder gleich sein.
Erfindungsgemäß bevorzugte Phosphorsäureester sind dadurch gekennzeichnet, dass 4 der Reste R₁, R₂, R₃ und R₄ ungleich OH.
Erfindungsgemäß besonders bevorzugte Phosphorsäureester sind dadurch gekennzeichnet, dass a = 2,5 bis 5, b = 8 bis 12 und c = d = 0 ist.
Besonders vorteilhafte, erfindungsgemäße Phosphorsäureester sind dadurch gekennzeichnet, dass R ausgewählt ist aus linearen, gesättigten Alkylresten mit 8 bis 16, insbesondere 10 bis 14, Kohlenstoffatomen. Insbesondere bevorzugt ist R eine Mischung aus linearen, gesättigten Alkylresten mit 12 und 14 Kohlenstoffatomen.
Zur Analyse eines erfindungsgemäßen Phosphorsäureesters und Bestimmung der Werte a, b, c und d ist das im Folgenden beschriebene Analyseverfahren einsetzbar: Die Molmassen der erfindungsgemäßen Phosphorsäureester kann auf einer HP 1100 GPC bestückt mit einer Säule SDV 1000/10000 Angström bestimmt werden. Als mobile phase wird Tetrahydrofuran mit einer Fließgeschwindigkeit von 1 ml/min eingesetzt. Die Probenkonzentration beträgt 10 g/l; die Detektion erfolgt mit einem HP RI detector, der gegen Polypropylenglykol kalibriert ist.
Kombiniert wird diese Messung mit einer NMR-Bestimmung (1H, 13C), wodurch man die individuelle Kettenlänge von a, b, c und d bestimmen kann. Vor allem im 1H-NMR zeigt der Peak bei 4,5 ppm die SO-Kettenlänge, um 1,3 ppm die EO-Kettenlänge und um 0,8 ppm die Länge der Alkylkette an. Die Esterbanden des Polyphosphorsäure-Esters findet man im Bereich um 4,2 ppm.
Über das 31P NMR kann die Polyphosphorsäure mit ihren mehrfach Veresterungen detektiert werden. Hier sieht man die Monoester bei 1,5 ppm, die Diester bei 1,0 ppm und die Tetraester bei 0,0 ppm.

Erfindungsgemäß bevorzugte Phosphorsäureester sind dadurch gekennzeichnet, dass sie nicht wasserlöslich sind. Unter dem Begriff "wasserlöslich" im Zusammenhang mit der vorliegenden Erfindung ist zu verstehen, dass sich eine Substanz in reinem Wasser bei 20 °C mit maximal 1 Gew.-%, bevorzugt 0,5 Gew.-%, besonders bevorzugt 0,1 Gew.-% lösen lässt, wobei sich die Gew.-% auf die Summe von Wasser und getesteter Substanz beziehen.

Die erfindungsgemäßen Phosphorsäureester lassen sich nach dem Fachmann bekannten Verfahren herstellen, wie sie beispielsweise in der EP0940406 beschrieben sind. Bevorzugt werden die erfindungsgemäßen Phosphorsäureester nach dem im Folgenden beschriebenen erfindungsgemäßen Verfahren hergestellt. Im Wesentlichen umfasst das erfindungsgemäße Verfahren Alkoxylierungsschritte. Entsprechende Anweisungen zur Durchführung von Alkoxylierungen findet der Fachmann zum Beispiel in der DE10054462, der WO1992012950 und der WO2005026273.
Das Verfahren der vorliegenden Erfindung zur Herstellung von Phosphorsäureestern umfasst die Verfahrensschritte
A) Bereitstellen eines verzweigten oder linearen, gesättigten oder ungesättigten Alkylalkohols mit 8 bis 20 Kohlenstoffatomen oder Mischungen davon,
B) Umsetzen mit, bezogen auf den Alkylalkohol, 2,2 bis 10 Mol, bevorzugt 2,5 bis 7 Mol, besonders bevorzugt 3 bis 4 Mol, Styroloxid bei einer Temperatur von 80 bis 150 °C, bevorzugt 100 bis 140 °C, insbesondere 110 bis 130 °C, und einem Druck von 0,4 bis 1,2 bar, bevorzugt 0,6 bis 1 bar, besonders bevorzugt 0,7 bis 0,9 bar,
C) Umsetzen mit, bezogen auf den Alkylalkohol, 3 bis 20 Mol, bevorzugt 4 bis 15 Mol, besonders bevorzugt 8 bis 12 Mol, Ethylenoxid bei einer Temperatur von 80 bis 130 °C, bevorzugt 100 bis 125 °C, insbesondere 110 bis 120 °C, und einem Druck von 0,5 bis 6,0 bar, bevorzugt 0,6 bis 3,0 bar, besonders bevorzugt 0,8 bis 1,5 bar,
D) Umsetzen mit, bezogen auf den Alkylalkohol, 0 bis 10 Mol, bevorzugt 0 Mol, Propylenoxid bei einer Temperatur von 80 bis 130 °C, bevorzugt 100 bis 125 °C, insbesondere 110 bis 120 °C, und einem Druck von 0,5 bis 6,0 bar, bevorzugt 0,6 bis 3 bar, besonders bevorzugt 0,8 bis 1,5 bar,
E) Umsetzen mit, bezogen auf den Alkylalkohol, 0 bis 10 Mol, bevorzugt 0 Mol, Butylenoxid bei einer Temperatur von 80 bis 130 °C, bevorzugt 100 bis 125 °C, insbesondere 110 bis 120 °C, und einem Druck von 0,5 bis 6,0 bar, bevorzugt 0,6 bis 3,0 bar, besonders bevorzugt 0,8 bis 1,5 bar,
F) Umsetzen mit, bezogen auf den Alkylalkohol, 0,1 bis 1,0 Mol, bevorzugt 0,1 bis 0,5 Mol, besonders bevorzugt 0,2 bis 0,3 Mol Polyphosphorsäure P₄O₁₀ bei einer Temperatur von 50 bis 110 °C, bevorzugt 60 bis 100 °C, insbesondere 70 bis 90 °C, und einem Druck von 0,4 bis 1,2 bar, bevorzugt 0,6 bis 1 bar, besonders bevorzugt 0,7 bis 0,9 bar und gegebenenfalls
H) Aufreinigen des erhaltenen Phosphorsäureesters.
Die Verfahrensschritte D), E) und H) des erfindungsgemäßen Verfahrens sind optional, dies wird in Verfahrensschritt D) und E) durch den Begriff "Umsetzen mit 0 Mol" Alkylenoxid ausgedrückt.
Der in Verfahrensschritt A) des erfindungsgemäßen Verfahrens bereitgestellte Alkohol ist bevorzugt ausgewählt aus lineare, gesättigte primären Alkylalkoholen mit 8 bis 16, insbesondere 10 bis 14, Kohlenstoffatomen oder Mischungen davon, insbesondere bevorzugt stellt der Alkohol eine Mischung aus lineare, gesättigte primären Alkylalkoholen mit 12 und 14 Kohlenstoffatomen dar.
In den Verfahrensschritten B bis E des erfindungsgemäßen Verfahrens erfolgt die Alkoxylierung in Gegenwart von Katalysatoren, vorzugsweise basischen (alkalischen) Katalysatoren wie Alkalimethanolaten, Natriumhydroxid und/oder Kaliumhydroxid. Besonders bevorzugt sind Natrium- und Kaliummethanolat, die bevorzugt in vorteilhafter Weise in Katalysatormengen von 0,1 bis 5,0 Gew.-%, vorzugsweise 0,2 bis 0,8 Gew.-% berechnet als Feststoff und bezogen auf erhaltenes Reaktionsprodukt eingesetzt werden. Es ist vorteilhaft und somit bevorzugt, das erfindungsgemäße Verfahren wasserfrei durchzuführen, wobei unter dem Begriff "wasserfrei" in Verbindung mit der vorliegenden Erfindung eine Menge von kleiner 0,5 Gew.-% Wasser bezogen auf den gesamten Reaktionsansatz verstanden wird. Ebenso vorteilhaft ist es, das erfindungsgemäße Verfahren lösemittelfrei, daher ohne einen Zusatz von Lösungsmitteln, durchzuführen.
Ein besonders bevorzugtes erfindungsgemäßes Verfahren ist dadurch gekennzeichnet, dass In Verfahrensschritt B) 3 bis 4 Mol, in Verfahrensschritt C) 8 bis 12 Mol und in Verfahrensschritt D) und E) 0 Mol - jeweils bezogen auf den Alkylalkohol - des jeweiligen Alkylenoxides eingesetzt werden.

Die durch das erfindungsgemäße Verfahren herstellbaren Phosphorsäureester können Mischungen von Phosphorsäureestern darstellen, die neben den oben beschriebenen erfindungsgemäßen Phosphorsäureestern der allgemeinen Formel 1 auch solche Phosphorsäureester enthalten, bei denen mindestens eine der P-O-P - Bindung gespalten wurde.

Ein weiterer Gegenstand der vorliegenden Erfindung ist eine Reinigungs- und/oder Pflegeformulierung enthaltend
Phosphorsäureester der allgemeinen Formel 1a und/oder ihre Salze 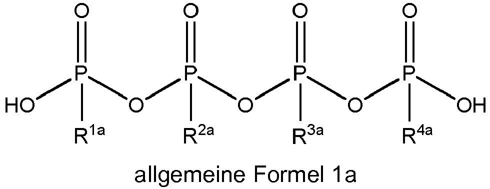 mit R^{1a}, R^{2a}, R^{3a} und R^{4a}, gleich oder verschieden, ausgewählt aus R-O-(SO)ₐₐ-(EO)_{bb}-(PO)_{cc}-(BO)_{dd}- und OH, mit
SO = 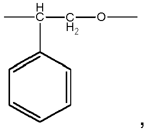
EO = -CH₂-CH₂-O-,
PO = -CH(CH₃)-CH₂-O- und
BO = -CH(CH₂CH₃)-CH₂-O- und
mit der Maßgabe, dass mindestens einer, bevorzugt mindestens 2, insbesondere 3, besonders bevorzugt 4 der Reste R^{1a}, R^{2a}, R^{3a} und R^{4a} ungleich OH,
wobei
aa = 1 bis 20, bevorzugt 2,5 bis 7, besonders bevorzugt 3 bis 4,
bb = 1 bis 100, bevorzugt 4 bis 40, besonders bevorzugt 8 bis 12,
cc = 0 bis 10, insbesondere 0,
dd = 0 bis 10, insbesondere 0 und
R ausgewählt aus verzweigten oder linearen, gesättigten oder ungesättigten Alkylresten mit 6 bis 24 Kohlenstoffatomen, bevorzugt lineare, gesättigte mit 8 bis 20, bevorzugt 9 bis 16, insbesondere 10 bis 14, Kohlenstoffatomen.
Es ist erfindungsgemäß bevorzugt, dass mindestens eine Verbindung der allgemeinen Formel 1a in einer Menge von 0,00001 Gew.-% bis 2,5 Gew.-%, besonders bevorzugt von 0,1 Gew.-% bis 1,2 Gew.-%, wobei sich die Gew.-% auf die Gesamtformulierung beziehen, in der wässrigen Formulierung enthalten ist.
Erfindungsgemäße Reinigungs- und Pflegeformulierungen sind insbesondere wässrige Formulierung, wobei unter dem Begriff wässrig ein Wassergehalt von mindestens 30, bevorzugt 80, besonders bevorzugt 98 Gew.-% Wasser bezogen auf die Gesamtformulierung verstanden wird.
Insbesondere bevorzugt sind wässrige Pflege- und Reinigungsformulierungen, welche neben der Verbindung der allgemeinen Formel 1a bevorzugt mindestens ein Tensid enthalten, wobei beispielsweise anionische, nichtionische, kationische und/oder amphotere Tenside enthalten sein können. Der Gesamttensidgehalt der wässrigen Formulierung beträgt vorzugsweise 0,1 bis 40 Gew.-% und besonders bevorzugt 0,1 bis 12,0 Gew.-%, bezogen auf die gesamte Formulierung.
Besonders bevorzugte erfindungsgemäße Formulierungen enthalten als Phosphorsäureester der allgemeinen Formel 1a die erfindungsgemäßen Phosphorsäureester der allgemeinen Formel 1 und/oder die durch das erfindungsgemäße Verfahren herstellbaren Phosphorsäureester, wobei die bevorzugten Ausführungsformen vorgenannter erfindungsgemäßer Gegenstände bevorzugt in den erfindungsgemäßen Formulierungen enthalten sind.

Ein weiterer Gegenstand der vorliegenden Erfindung ist die Verwendung mindestens eines
Phosphorsäureesters der allgemeinen Formel 1a und/oder seines Salzes 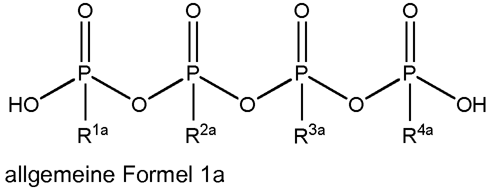 mit R^{1a}, R^{2a}, R^{3a} und R^{4a}, gleich oder verschieden, ausgewählt aus R-O-(SO)ₐₐ-(EO)_{bb}-(PO)_{cc}-(BO)_{dd}- und OH, mit
SO = 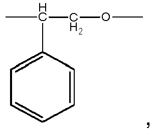
EO = -CH₂-CH₂-O-,
PO = -CH(CH₃)-CH₂-O- und
BO = -CH(CH₂CH₃)-CH₂-O- und
mit der Maßgabe, dass mindestens einer, bevorzugt mindestens 2, insbesondere 3, besonders bevorzugt 4 der Reste R^{1a}, R^{2a}, R^{3a} und R^{4a} ungleich OH,
wobei
aa = 1 bis 20, bevorzugt 2,5 bis 7, besonders bevorzugt 3 bis 4,
bb = 1 bis 100, bevorzugt 4 bis 40, besonders bevorzugt 8 bis 12,
cc = 0 bis 40, bevorzugt 0 bis 10, insbesondere 0,
dd = 0 bis 20, bevorzugt 0 bis 10, insbesondere 0 und
R ausgewählt aus verzweigten oder linearen, gesättigten oder ungesättigten Alkylresten mit 6 bis 24 Kohlenstoffatomen, bevorzugt lineare, gesättigte mit 8 bis 20, bevorzugt 9 bis 16, insbesondere 10 bis 14, Kohlenstoffatomen,
oder mindestens eines erfindungsgemäßen Phosphorsäureesters der allgemeinen Formel 1,
oder eines Phosphorsäureesters erhältlich durch das erfindungsgemäße Verfahren, oder einer erfindungsgemäßen Formulierung
zur Erzeugung von Glanz auf einer Oberfläche, bevorzugt auf einer harten Oberfläche, die bevorzugt nicht saugfähig ist.
Bei der erfindungsgemäßen Verwendung ist bevorzugt Papier ausgenommen.
Die erfindungsgemäße Verwendung auf Oberflächen ist insbesondere für Fahrzeuge, Wasserfahrzeuge, Flugzeuge, Fensterscheiben und -bänke, Duschabtrennungen, Fußböden wie Teppiche, Fliesen, Laminate, Parkett, Korkfußböden, Marmor-, Stein- und Feinsteinzeugböden, Haushaltskeramiken wie WCs, Waschbecken, Bidets, Duschtassen, Badewannen, Türklinken, Armaturen, Haushaltswerkzeuge wie Waschmaschinen, Trockner, Spülmaschinen, Spülen aus Keramik oder Edelstahl, Möbel wie Tische, Stühle, Regale, Ablageflächen, Fenster, Kochgeschirr, Geschirr und Besteck, Werkzeuge wie chirurgische Instrumente, Staubsauger, Maschinen, Rohrleitungen, Tanks und Geräte für Transport, Verarbeitung und Aufbewahrung in der Lebensmittelverarbeitung geeignet.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Herstellung von Phosphorsäureestern (erfindungsgemäß)

### EX2010/27

591,5g (3,0 Mol) Lauryl-/Myristyl Alkohol und 21,4g (0,31 Mol) Kaliummethylat wurden in einen Reaktor gegeben und ein Vakuum angelegt. Nach sorgfältiger Spülung mit Reinststickstoff wurde auf 115°C erhitzt und 1209g (10 Mol) Styroloxid innerhalb von 15 Minuten und einem Vakuum von -0,8 bar zugegeben. Nach weiteren drei Stunden war die Anlagerung des Styroloxids beendet, erkennbar an einem Restgehalt an Styroloxid, der laut GC <0,1 Gew-% lag. Anschließend wurden 1478g (33,5 Mol) Ethylenoxid so schnell in den Reaktor dosiert, dass die Innentemperatur 120°C und der Druck 6 bar nicht überschritten wird. Nach vollständiger Einleitung des Ethylenoxides wurde die Temperatur so lange auf 115°C gehalten, bis ein konstanter Manometerdruck das Ende der Nachreaktion anzeigte. Schließlich wurden bei 80-90°C die nicht umgesetzten Restmonomere im Vakuum entfernt. Das erhaltene Produkt wurde mit Hilfe von Phosphorsäure neutralisiert und das Wasser durch Destillation, das entstandene Kaliumphosphat durch Filtration zusammen mit einem Filterhilfsmittel entfernt. Die Molekularmenge aus der Bestimmung der Hydroxylzahl bei einer angenommenen Funktionalität von 1 betrug M= 926g/mol.
900g (0,95 mol) des Blockpolymers wurden im Reaktor vorgelegt und nach Zugabe von etwa 50 ml Toluol auf 110°C erhitzt. Durch Anlegen von Vakuum wurden alle flüchtigen Anteile, insbesondere evtl. im Produkt vorhandenes Wasser, aus dem Reaktionsraum destillativ entfernt. Nach dem Belüften mit Stickstoff temperierte man auf 80°C und gab 81,2g der flüssigen Polyphosphorsäure, 84%ig (0,24 Mol P₄O₁₀; Hersteller Clariant) hinzu. Nach 2 Stunden war die Reaktion abgeschlossen. Im 1H-NMR-Spektrum war keine aliphatische Hydroxylgruppe mehr nachweisbar und im 31 P-NMR- Spektrum war die noch erhaltene polymere Struktur nachweisbar. Auch im GPC sind die höher polymeren Strukturen im Bereich von 4000g/mol nachweisbar.

In analoger Weise wurden nach dem oben beschriebenen Verfahren weitere Verbindungen, wie in der folgenden Tabelle gelistet, unter Anpassung der entsprechend eingesetzten Mengen hergestellt.

| | R | a | b | c | d | x |
|---|---|---|---|---|---|---|
| EX2010/27 | C 12-14 | 3,3 | 10 | 0 | 0 | 0,1-1 |
| EX2010/28 | C 8 | 3,3 | 6 | 0 | 0 | 0,25 |
| EX2010/29 | C 8 | 3,3 | 4 | 0 | 0 | 0,25 |
| AB 215 | C 18.1 | 3,0 | 11 | 0 | 0 | 0,25 |

### Herstellung von Phosphorsäureestern (nicht erfindungsgemäß)

Die Beispiel V3A und V6A der EP 1167452 wurden wie folgt nachgestellt: V3A
3375g (23,4 Mol) 1-Nonalylalkohol und 163g (2,3 Mol) Kaliummethylat wurden in einen Reaktor gegeben. Nach sorgfältiger Spülung mit Reinststickstoff wurde auf 110°C erhitzt und 3082g (23,4 Mol) Styroloxid innerhalb von einer Stunde zugegeben. Nach weiteren zwei Stunden war die Anlagerung des Styroloxids beendet, erkennbar an einem Restgehalt an Styroloxid, der laut GC <0,1 Gew.-% lag. Anschließend wurden 9266,4g (210 Mol) Ethylenoxid so schnell in den Reaktor dosiert, dass die Innentemperatur 120°C und der Druck 6 bar nicht überschritten wird. Nach vollständiger Einleitung des Ethylenoxides wurde die Temperatur so lange auf 115°C gehalten, bis ein konstanter Manometerdruck das Ende der Nachreaktion anzeigte. Schließlich wurden bei 80-90°C die nicht umgesetzten Restmonomere im Vakuum entfernt. Das erhaltene Produkt wurde mit Hilfe von Phosphorsäure neutralisiert und das Wasser durch Destillation, das entstandene Kaliumphosphat durch Filtration zusammen mit einem Filterhilfsmittel entfernt. Das Molekulargewicht aus der Bestimmung der Hydroxylzahl bei einer angenommenen Funktionalität von 1 betrug M= 635 g/mol.
635g des Blockpolymers (entspricht 1 OH-Äquivalent) wurden im Reaktor vorgelegt und nach Zugabe von etwa 50 ml Toluol auf 110°C erhitzt. Durch Anlegen von Vakuum wurden alle flüchtigen Anteile, insbesondere evtl. im Produkt vorhandenes Wasser, aus dem Reaktionsraum destillativ entfernt. Nach dem Belüften mit Stickstoff temperierte man auf 80°C und gab 85g der flüssigen Polyphosphorsäure, (0,25 Mol P₄O₁₀; Hersteller Merck; Gehalt als P₄O₁₀ berechnet: ca. 85%) hinzu. Nach 2 Stunden war die Reaktion abgeschlossen. Im ¹H-NMR-Spektrum war keine aliphatische Hydroxylgruppe mehr nachweisbar. Hier waren im 31P-NMR keine Polymeren Strukturen mehr nachweisbar, dies bestätigte sich auch in der Molgewichtsbestimmung im GPC wie oben beschrieben, es waren keine Strukturen oberhalb von 1000g/mol sichtbar. Mit diesen Reaktionspartnern entstehen im Wesentlichen nur Monoester.

In analoger Weise wurde Verbindung V6A hergestellt.

| | R | a | b | c | d | x |
|---|---|---|---|---|---|---|
| V3A | C 9 | 1,0 | 9 | 0 | 0 | 0,25 |
| V6A | C 9 | 1,0 | 9 | 3 | 0 | 0,25 |

### Glanzvermögen

Es wurden die folgenden Formulierungen (Angaben in Gew.-%, pH-Wert bei 20 °C) hergestellt.
FAEO steht für Fettalkoholethoxylat
FAEO C12-18 steht für Fettalkohol-C₁₂₋₁₈ ethoxylat mit 8-12 EO
FAEO C6 steht für Fettalkohol-C₆ ethoxylat mit 4-5 EO
APG steht für Alkylpolyglucosid; C₈₋₁₀ G_{1,6}
MGDA steht für Methylglycindiessigsäure (Trilon M)

| | Form 1A | Form 1B | Form 1C | Form 1D* | Form 1E* |
|---|---|---|---|---|---|
| FAEO | 2,0 | 2,0 | 2,0 | 2,0 | 2,0 |
| APG | 3,0 | 3,0 | 3,0 | 3,0 | 3,0 |
| EX 2010/27 | 0,6 | - | - | - | - |
| EX 2010/28 | | 0,6 | | | |
| AB 215 | | | 0,6 | | |
| V3A | | | | 0,6 | |
| V6A | | | | | 0,6 |
| MGDA | 0,1 | 0,1 | 0,1 | 0,1 | 0,1 |
| Wasser | Rest | Rest | Rest | Rest | Rest |
| pH-Wert | 7,3 | 7,3 | 7,3 | 7,3 | 7,3 |

| | Form 2A | Form 2B | Form 2C* | Form 2D* |
|---|---|---|---|---|
| FAEO C12-18 | 2,0 | 2,0 | 2,0 | 2,0 |
| FAEO C6 | 1,5 | 1,5 | 1,5 | 1,5 |
| LAS | 2,5 | 2,5 | 2,5 | 2,5 |
| EX 2010/27 | 0,6 | | | |
| EX 2010/29 | | 0,6 | | |
| V3A | | | 0,6 | |
| V6A | | | | 0,6 |
| Ethanol | 3,0 | 3,0 | 3,0 | 3,0 |
| Wasser | Rest | Rest | Rest | Rest |
| pH-Wert | 11,2 | 11,2 | 11,2 | 11,2 |

Die Formulierungen wurde für den folgenden Test auf 1,2 Gew.-% in Leitungswasser mit 8 °dH (Grad deutscher Härte) verdünnt und eingesetzt.
Für eine Beschreibung der Glanzsteigerung benötigt man gleichmäßig geschädigte Oberflächen, diese wurden mit einer Vorschädigung auf definierte Werte validiert. Um eine gezielte Schädigung (Glanzreduktion) auf der Fliese (15x15 cm, Royal Mosa in schwarz) zu erzeugen, wurden fabrikneue Fliesen in einem Geschirrspülmittel (Neodisher Lösung (5,7g/l) bei 70°C für ca. 1h geschädigt. Die Fliesen wurden aus dem Tauchbad entnommen und für 5 Sekunden mit destilliertem. Wasser abgespült und danach für 1h bei 50°C im Trockenschrank waagerecht getrocknet. Vor jeder Messung wurden die Fliesen mit Ethylacetat abgewischt um Staub und sonstige Anhaftungen restlos zu entfernen. Durch diesen Prozess wurde der Glanz von 94° auf einen Wert zwischen 50 und 70° Glanz reduziert. Fliesen, die Glanzwerte unterhalb 50° ergaben, wurden für die Messungen nicht eingesetzt.
Auf einer solchen gereinigten und vorbehandelten Fliese wurden 5 ml Testformulierung mit einem Putztuch (Bodenwunder), welches in einer Platte mit 2x5 cm eingeklemmt war, aufgetragen. Die Reinigerlösung wurde in zwei Wischbewegungen verteilt und für mindestens eine Stunden bei Raumtemperatur (23°C) waagerecht getrocknet. Anschließend wurde mit einem Glanzmessgerät (Glanzmessgerät Dr. Lange) an 5-10 Stellen der Glanz vermessen. Die Zahlenwerte für 60° Glanzwerte wurden gemittelt und notiert. Verglichen zu den Werten der geschädigten, aber unbehandelten Oberfläche ergaben sich hieraus die in der Tabelle notierte Glanzsteigerungen nach Einsatz der entsprechenden Formulierung.

Die Testergebnisse sind in der folgenden Tabelle dargestellt, wobei Form 1₀ bzw. Form 2₀ Formulierungen ohne Zugabe eines Phosphorsäureesters (Kontrolle) darstellen.

| Formulierung | Glanzwert |
|---|---|
| Form 1₀ | 2,7 |
| Form 1A | 11,9 |
| Form 1B | 13,3 |
| Form 1C | 12,7 |
| Form 1D^{*} | 2,5 |
| Form 1E^{*} | 2,8 |
| | |
| Form 2₀ | 6 |
| Form 2A | 14,5 |
| Form 2B | 13,1 |
| Form 2C^{*} | 3,2 |
| Form 2D^{*} | 7,2 |

| | |
|---|---|
| ^{*}nicht erfindungsgemäß | |

Die Messergebnisse zeigen, dass die erfindungsgemäßen Formulierungen gegenüber der Kontrolle eine signifikante Glanzzunahme hervorrufen, wohingegen die nicht erfindungsgemäßen keinen Effekt verursachen.
Die nicht erfindungsgemäßen Additive ergaben schmierige, streifige bzw. fleckige, nicht gleichmäßige Oberflächen. Die erfindungsgemäßen Additive erzeugten eine gleichmäßig glänzende Fläche, die die Oberfläche auch wieder neuwertig erscheinen ließ.

### Reparatureffekt

Von der Oberfläche einer beschädigten schwarzen Fliese wurden vor und nach dem fünfmaligen Auftragen der Formulierungen Form 2A und Form 2B Rasterkraftmikroskopaufnahmen gemacht. Die Aufnahmen zeigen deutlich den Reparatureffekt der erfindungsgemäßen Zusammensetzung.

### Adhäsionsminimierung durch Reparatureffekt

Des Weiteren wurde die Adhäsion auf einer Fliese (beschädigt oder unbeschädigt) vor und nach dem Auftragen der erfindungsgemäßen Zusammensetzungen in einer vertikalen und einer horizontalen Messanordnung gemessen.

Die Ergebnisse zeigen, dass nach der Behandlung mit dem erfindungsgemäßen Mittel die Reibungskraft auf der beschädigten Fliese bis zu 50% geringer ist, was ein Hinweis auf den Reparatureffekt der Zusammensetzung ist.

### Formulierungsbeispiele

Im Folgenden werden Formulierungsbeispiele in tabellarischer Form beinhaltend die jeweilige Menge ausgedrückt in Gew.-% bezogen auf die Gesamtformulierung angegeben, wobei die folgenden Rohstoffe eingesetzt wurden:
TEGOTENS SD 100 - Sorbitansesquioctanoate, Evonik Industries AG
Rewopol D 510 NC - Ethylhexylsulfat, 40%, Evonik Industries AG
Laureth 10, Evonik Industries AG
Rewopol CC 40 B - Kationisches/Nichtionisches Blend, Evonik Industries AG
Tegotens DO - Decamin Oxid, 30%, Evonik Industries AG
Rewocare TS 35 - Anionisches Blend, Evonik Industries AG
Rewoquat CQ 100- Kationisches/Nichtionisches Blend, Evonik Industries AG
Rewoteric AM KSF 40 - Cocoamphodipropionat, 40%, Evonik Industries AG
TEGO Polish Additiv WE 50 - Emulsion von Avokado Öl, Evonik Industries AG
TEGO Polish Additiv ASL 60 - Emulsion eines Siliconöls, Evonik Industries AG
Rewopol SC 200 - Amphoteres/Nichtionisches Blend, Evonik Industries AG
Rewopol SB DO 75 - Diisooctylsulfosuccinat, 75%, Evonik Industries AG
Rewopol NLS 28 - Natriumlaurylethersulfat, 28%, Evonik Industries AG
Rewoteric AM TEG - PEG-2 Talgfettbetain, 50%, Evonik Industries AG
Varonic T 202 , PEG-2 Talgamine, Evonik Industries AG
Tegotens EC 11, Endgruppenverschlossener Fettalkohol, Evonik Industries AG
Rewopol SB FA 30 - Laureth-3-Sulfosuccinate, 40%, Evonik Industries AG
Rewoteric AM V - C8-10 Amphyacetat, 32%, ,Evonik Industries AG
TEGO Betain C 60 - Cocamidoproylbetain, 48%, Evonik Industries AG
VAROX 365 - Laurylaminoxid, 30%, Evonik Industries AG

| **Bathroom Cleaner** | Form-3A | Form-3B | Form-3C |
|---|---|---|---|
| TEGOTENS SD 100 | | | 1,0 |
| Rewopol D 510 NC | | | 1,0 |
| Laureth 10 | | 1,2 | |
| Rewopol CC 40 B | 2,0 | | |
| NaOH | | 0,4 | 2,0 |
| Zitronsäure | 0,5 | 3,0 | 2,5 |
| Propylenglycol-n-butylether | 1,0 | | |
| Isopropanol | 5,0 | | |
| EX 2010/27 | 0,6 | 0,6 | 0,6 |
| Wasser | Rest | Rest | Rest |

| **Kunststoffreiniger** | Form-4A | Form-4B | Form-4C |
|---|---|---|---|
| Tegotens DO | 5 | | 3,3 |
| Rewocare TS 35 | | 0,4 | |
| Ethylene Glycol | 1 | | |
| Zitronsäure | 1 | | 1,2 |
| Isopropanol | | 15 | 10 |
| EX 2010/27 | 0,1 | 0,1 | 0,1 |
| Wasser | Rest | Rest | Rest |

| **Lackreiniger und Shampoo** | Form-5A | Form-5B | Form-5C |
|---|---|---|---|
| Rewoquat CQ 100 | 20 | | |
| Rewoteric AM KSF 40 | 15 | | |
| TEGO Polish Additiv WE 50 | | 4 | |
| TEGO Polish Additiv ASL 60 | | 1 | |
| Rewopol SC 200 | | | 10 |
| Methylglycindiessigsäure, 40% | | | 6 |
| Tetrakaliumpyrophosphat | 5 | | |
| Zitronsäure | | | 0,1 |
| Orangen Terpene | 10 | | |
| Butylglykol | 5 | | |
| EX 2010/27 | 0,9 | 0,6 | 0,3 |
| Wasser | Rest | Rest | Rest |

| **Glasreiniger** | Form-6A | Form-6B | Form-6C |
|---|---|---|---|
| Tegotens DO | 0,6 | 7,5 | |
| Rewopol SB DO 75 | | 1,0 | |
| Rewopol NLS 28 | | 1,5 | |
| Rewopol TS 35 | | | 1,0 |
| Tegotens SD 100 | | | 0,2 |
| Isopropanol | 15,0 | | 15,0 |
| Methylglycindiessigsäure, 40% | | | 2,0 |
| Sec. Alkan Sulfonat, 30% | 0,4 | | |
| EX 2010/27 | 0,1 | 0,9 | 0,2 |
| Wasser | Rest | Rest | Rest |

| **WC Reiniger** | Form-7A | Form-7B | Form-7C |
|---|---|---|---|
| Rewoteric AM TEG | 1,5 | | |
| Rewoquat CQ 100 | 3,0 | | |
| Varonic T 202 | 1,5 | | 5 |
| Tegotens EC 11 | | 1,2 | |
| Tegotens DO | | 2 | |
| Natriumchlorid | | | |
| Phosphorsäure | 10 | 5 | |
| Zitronsäure | | 10 | 8 |
| EX 2010/27 | 0,9 | 0,6 | 0,6 |
| Wasser | Rest | Rest | Rest |

| **Allzweckreiniger** | Form-8A | Form-8B | Form-8C |
|---|---|---|---|
| Rewopol SB FA 30 | 12 | | |
| Rewoteric AM V | 8 | | |
| Rewopol SC 200 | | 6 | |
| Tegotens EC 11 | | | 1,2 |
| Tegotens DO | | | 2 |
| REWOPOL NLS 28 | 28,5 | | |
| Undeceth-6 | 2 | | |
| Methylglycindiessigsäure, 40% | | 7,5 | |
| Zitronsäure | 0,5 | | 10 |
| Phosphorsäure | | | 5 |
| EX 2010/27 | 1,2 | 0,3 | 0,6 |
| Wasser | Rest | Rest | Rest |

| **Geschirrspülmittel** | Form-9A | Form-9B |
|---|---|---|
| TEGO Betain C 60 | 4,2 | |
| VAROX 365 | | 11,5 |
| Laurylethersulfat, 70% | 20,0 | 18,5 |
| Natriumchlorid | 1,3 | 0,8 |
| Zitronsäure | 0,2 | |
| EX 2010/27 | 1,2 | 1,2 |
| Wasser | Rest | Rest |

## Patentansprüche

1. Phosphorsäureester der allgemeinen Formel 1 oder sein Salz 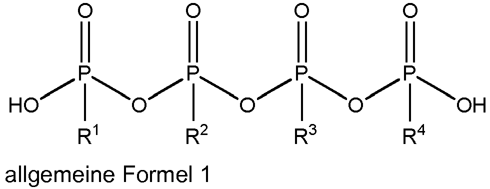 mit R₁, R₂, R₃ und R₄, gleich oder verschieden, ausgewählt aus R-O-(SO)ₐ-(EO)_{b}-(PO)_{c}-(BO)_{d}- und OH, mit
SO = 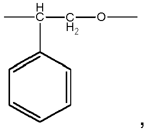 EO = -CH₂-CH₂-O-,
PO = -CH(CH₃)-CH₂-O- und
BO = -CH(CH₂CH₃)-CH₂-O- und
mit der Maßgabe, dass mindestens einer der Reste R₁, R₂, R₃ und R₄ ungleich OH,
wobei
a = 2,2 bis 10,
b = 3 bis 20,
c = 0 bis 10,
d = 0 bis 10 und
R ausgewählt aus verzweigten oder linearen, gesättigten oder ungesättigten Alkylresten mit 8 bis 20 Kohlenstoffatomen.

2. Phosphorsäureester oder sein Salz gemäß Anspruch 1, **dadurch gekennzeichnet, dass** 4 der Reste R₁, R₂, R₃ und R₄ ungleich OH.

3. Phosphorsäureester oder sein Salz gemäß Anspruch 1 oder 2, **dadurch gekennzeichnet, dass**
a = 2,5 bis 5
b = 8 bis 12 und
c=d=0.

4. Phosphorsäureester oder sein Salz gemäß mindestens einem der vorherigen Ansprüche, **dadurch gekennzeichnet, dass** R ausgewählt ist aus linearen, gesättigten Alkylresten mit 8 bis 16 Kohlenstoffatomen.

5. Verfahren zur Herstellung von Phosphorsäureestern umfassend die Verfahrensschritte
A) Bereitstellen eines verzweigten oder linearen, gesättigten oder ungesättigten Alkylalkohols mit 8 bis 20 Kohlenstoffatomen,
B) Umsetzen mit, bezogen auf den Alkylalkohol, 2,2 bis 10 Mol Styroloxid bei einer Temperatur von 80 bis 150 °C und einem Druck von 0,4 bis 1,2 bar,
C) Umsetzen mit, bezogen auf den Alkylalkohol, 3 bis 20 Mol Ethylenoxid bei einer Temperatur von 80 bis 130 °C und einem Druck von 0,5 bis 6,0 bar,
D) Umsetzen mit, bezogen auf den Alkylalkohol, 0 bis 10 Mol Propylenoxid bei einer Temperatur von 80 bis 130 °C und einem Druck von 0,5 bis 6,0 bar,
E) Umsetzen mit, bezogen auf den Alkylalkohol, 0 bis 10 Mol Butylenoxid bei einer Temperatur von 80 bis 130 °C und einem Druck von 0,5 bis 6,0 bar,
F) Umsetzen mit, bezogen auf den Alkylalkohol, 0,1 bis 1,0 Mol Polyphosphorsäure P₄O₁₀ bei einer Temperatur von 50 bis 110 °C und einem Druck von 0,4 bis 1,2 bar und gegebenenfalls H) Aufreinigen des erhaltenen Phosphorsäureesters.

6. Verfahren gemäß Anspruch 5, **dadurch gekennzeichnet, dass** das Verfahren wasserfrei durchgeführt wird.

7. Verfahren gemäß Anspruch 5 oder 6, **dadurch gekennzeichnet, dass** das Verfahren lösemittelfrei durchgeführt wird.

8. Reinigungs- und/oder Pflegeformulierung enthaltend Phosphorsäureester der allgemeinen Formel 1a und/oder ihre Salze 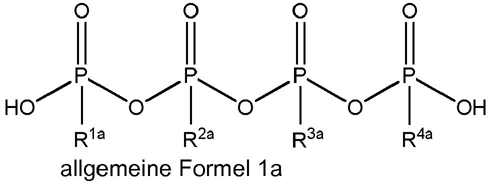 mit R^{1a}, R^{2a}, R^{3a} und R^{4a}, gleich oder verschieden, ausgewählt aus R-O-(SO)ₐₐ-(EO)_{bb}-(PO)_{cc}-(BO)_{dd}- und OH, mit
SO = 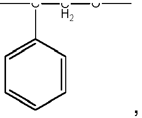 EO = -CH₂-CH₂-O-,
PO = -CH(CH₃)-CH₂-O- und
BO = -CH(CH₂CH₃)-CH₂-O- und
mit der Maßgabe,
dass mindestens einer, bevorzugt mindestens 2, insbesondere 3, besonders bevorzugt 4 der Reste R^{1a}, R^{2a}, R^{3a} und R^{4a} ungleich OH,
wobei
aa = 1 bis 20, bevorzugt 2,5 bis 7, besonders bevorzugt 3 bis 4,
bb = 1 bis 100, bevorzugt 4 bis 15, besonders bevorzugt 8 bis 12,
cc = 0 bis 10, insbesondere 0,
dd = 0 bis 10, insbesondere 0 und
R ausgewählt aus verzweigten oder linearen, gesättigten oder ungesättigten Alkylresten mit 6 bis 24 Kohlenstoffatomen.

9. Formulierung gemäß Anspruch 8, **dadurch gekennzeichnet dass** sie mindestens eine Verbindung der allgemeinen Formel 1a in einer Menge von 0,00001 Gew.-% bis 2,5 Gew.-%, besonders bevorzugt von 0,1 Gew.-% bis 1,2 Gew.-%, wobei sich die Gew.-% auf die Gesamtformulierung beziehen, enthält.

10. Wässrige Formulierung gemäß Anspruch 8 oder 9, **dadurch gekennzeichnet dass** sie mindestens ein Tensid enthält.

11. Formulierung gemäß mindestens einem der Ansprüche 8 bis 10, **dadurch gekennzeichnet, dass** sie mindestens einen Phosphorsäureester gemäß einem der Ansprüche 1 bis 4 als Phosphorsäureester der allgemeinen Formel 1a enthält.

12. Verwendung mindestens eines Phosphorsäureesters der allgemeinen Formel 1a und/oder seines Salzes 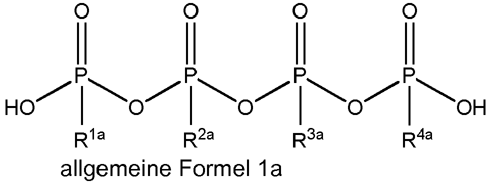 mit R^{1a}, R^{2a}, R^{3a} und R^{4a}, gleich oder verschieden, ausgewählt aus R-O-(SO)ₐₐ-(EO)_{bb}-(PO)_{cc}-(BO)_{dd}- und OH, mit
SO = 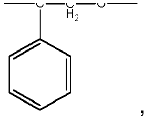 EO = -CH₂-CH₂-O-,
PO = -CH(CH₃)-CH₂-O- und
BO = -CH(CH₂CH₃)-CH₂-O- und
mit der Maßgabe, dass mindestens einer, bevorzugt mindestens 2, insbesondere 3, besonders bevorzugt 4 der Reste R^{1a}, R^{2a}, R^{3a} und R^{4a} ungleich OH,
wobei
aa = 1 bis 20,
bb = 1 bis 100,
cc = 0 bis 40, insbesondere 0,
dd = 0 bis 20, insbesondere 0 und
R ausgewählt aus verzweigten oder linearen, gesättigten oder ungesättigten Alkylresten mit 6 bis 24 Kohlenstoffatomen,
oder mindestens eines Phosphorsäureesters gemäß einem der Ansprüche 1 bis 4, oder einer Formulierung gemäß mindestens einem der Ansprüche 8 bis 11 zur Erzeugung von Glanz auf einer Oberfläche.

## Claims

1. Phosphoric acid ester of the general formula 1 or its salt 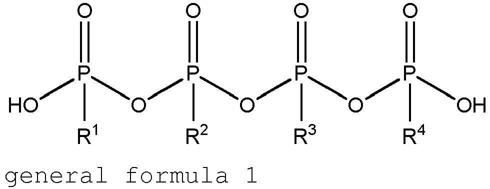 where R₁, R₂, R₃ and R₄ are identical or different and are selected from R-O-(SO)ₐ-(EO)_{b}-(PO)_{c}-(BO)_{d}- and OH, where
SO = 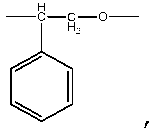 EO = -CH₂-CH₂-O-,
PO = -CH(CH₃)-CH₂-O- and
BO = -CH(CH₂CH₃)-CH₂-O- and
with the proviso that at least one of the radicals R₁, R₂, R₃ and R₄ is not OH,
where
a = 2.2 to 10,
b = 3 to 20,
c = 0 to 10,
d = 0 to 10 and
R is selected from branched or linear, saturated or unsaturated alkyl radicals having 8 to 20 carbon atoms.

2. Phosphoric acid ester or its salt according to Claim 1, **characterized in that** 4 of the radicals R₁, R₂, R₃ and R₄ are not OH.

3. Phosphoric acid ester or its salt according to Claim 1 or 2, **characterized in that**
a = 2.5 to 5
b = 8 to 12 and
c = d = 0.

4. Phosphoric acid ester or its salt according to at least one of the preceding claims, **characterized in that** R is selected from linear, saturated alkyl radicals having 8 to 16 carbon atoms.

5. Process for preparing phosphoric acid esters comprising the process steps
A) provision of a branched or linear, saturated or unsaturated alkyl alcohol having 8 to 20 carbon atoms,
B) reaction with, based on the alkyl alcohol, 2.2 to 10 mol of styrene oxide at a temperature of 80 to 150°C and a pressure of 0.4 to 1.2 bar,
C) reaction with, based on the alkyl alcohol, 3 to 20 mol of ethylene oxide at a temperature of 80 to 130°C and a pressure of 0.5 to 6.0 bar,
D) reaction with, based on the alkyl alcohol, 0 to 10 mol of propylene oxide at a temperature of 80 to 130°C and a pressure of 0.5 to 6.0 bar,
E) reaction with, based on the alkyl alcohol, 0 to 10 mol of butylene oxide at a temperature of 80 to 130°C and a pressure of 0.5 to 6.0 bar,
F) reaction with, based on the alkyl alcohol, 0.1 to 1.0 mol of polyphosphoric acid P₄O₁₀ at a temperature of 50 to 110°C and a pressure of 0.4 to 1.2 bar and optionally
H) purification of the resulting phosphoric acid ester.

6. Process according to Claim 5, **characterized in that** the process is carried out water-free.

7. Process according to Claim 5 or 6, **characterized in that** the process is carried out solvent-free.

8. Cleaning and/or care formulation comprising phosphoric acid ester of the general formula 1a and/or its salts 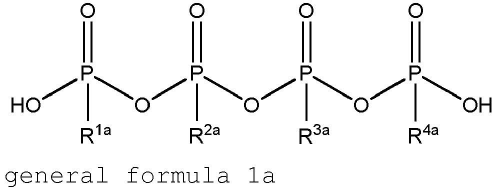 where R^{1a}, R^{2a}, R^{3a} and R^{4a} are identical or different and are selected from R-O-(SO)ₐₐ-(EO)_{bb}-(PO)_{cc}-(BO)_{dd}- and OH, where
SO = 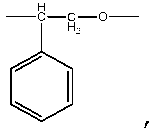
EO = -CH₂-CH₂-O-,
PO = -CH(CH₃)-CH₂-O- and
BO = -CH(CH₂CH₃)-CH₂-O- and
with the proviso,
that at least one, preferably at least 2, in particular 3, particularly preferably 4, of the radicals R^{1a}, R^{2a}, R^{3a} and R^{4a} are not OH,
where
aa = 1 to 20, preferably 2.5 to 7, particularly preferably 3 to 4,
bb = 1 to 100, preferably 4 to 15, particularly preferably 8 to 12,
cc = 0 to 10, in particular 0,
dd = 0 to 10, in particular 0 and
R is selected from branched or linear, saturated or unsaturated alkyl radicals having 6 to 24 carbon atoms.

9. Formulation according to Claim 8, **characterized in that** it comprises at least one compound of the general formula 1a in an amount of from 0.00001% by weight to 2.5% by weight, particularly preferably from 0.1% by weight to 1.2% by weight, where the % by weight refers to the total formulation.

10. Aqueous formulation according to Claim 8 or 9, **characterized in that** it comprises at least one surfactant.

11. Formulation according to at least one of Claims 8 to 10, **characterized in that** it comprises at least one phosphoric acid ester according to one of Claims 1 to 4 as phosphoric acid ester of the general formula 1a.

12. Use of at least one phosphoric acid ester of the general formula 1a and/or its salt 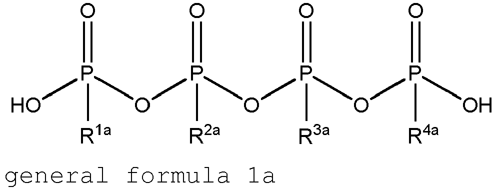 where R^{1a}, R^{2a}, R^{3a} and R^{4a} are identical or different and are selected from R-O-(SO)ₐₐ-(EO)_{bb}-(PO)_{cc}-(BO)_{dd}- and OH, where
SO = 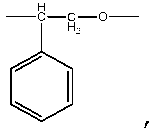
EO = -CH₂-CH₂-O-,
PO = -CH(CH₃)-CH₂-O- and
BO = -CH(CH₂CH₃)-CH₂-O- and
with the proviso, that at least one, preferably at least 2, in particular 3, particularly preferably 4, of the radicals R^{1a}, R^{2a}, R^{3a} and R^{4a} is not OH,
where
aa = 1 to 20,
bb = 1 to 100,
cc = 0 to 40, in particular 0,
dd = 0 to 20, in particular 0 and
R is selected from branched or linear, saturated or unsaturated alkyl radicals having 6 to 24 carbon atoms,
or at least one phosphoric acid ester according to one of Claims 1 to 4,
or of a formulation according to at least one of Claims 8 to 11
for generating shine on a surface.

## Revendications

1. Ester de l'acide phosphorique de formule générale 1 ou son sel 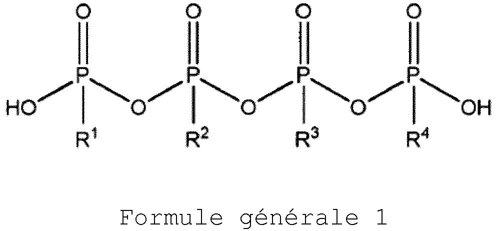 avec R₁, R₂, R₃ et R₄ identiques ou différents, choisis parmi R-O-(SO)ₐ-(EO)_{b}-(PO)_{c}-(BO)_{d}- et OH, avec
SO = 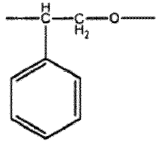 EO = -CH₂-CH₂-O-,
PO = -CH(CH₃)-CH₂-O- et
BO = -CH(CH₂CH₃)-CH₂-O- et
à condition qu'au moins un des radicaux R₁, R₂, R₃ et R₄ soit différent d'OH, avec
a = 2,2 à 10,
b = 3 à 20,
c = 0 à 10,
d = 0 à 10, et
R est choisi parmi les radicaux alkyle ramifiés ou linéaires, saturés ou insaturés, de 8 à 20 atomes de carbone.

2. Ester de l'acide phosphorique ou son sel selon la revendication 1, **caractérisé en ce que** 4 des radicaux R₁, R₂, R₃ et R₄ sont différents d'OH.

3. Ester de l'acide phosphorique ou son sel selon la revendication 1 ou 2, **caractérisé en ce que**
a = 2,5 à 5,
b = 8 à 12 et
c = d = 0.

4. Ester de l'acide phosphorique ou son sel selon au moins l'une quelconque des revendications précédentes, **caractérisé en ce que** R est choisi parmi les radicaux alkyle linéaires saturés de 8 à 16 atomes de carbone.

5. Procédé de fabrication d'esters de l'acide phosphorique, comprenant les étapes de procédé suivantes :
A) la préparation d'un alcool alkylique ramifié ou linéaire, saturé ou insaturé, de 8 à 20 atomes de carbone,
B) la mise en réaction avec, par rapport à l'alcool alkylique, 2,2 à 10 moles d'oxyde de styrène à une température de 80 à 150 °C et à une pression de 0,4 à 1,2 bar,
C) la mise en réaction avec, par rapport à l'alcool alkylique, 3 à 20 moles d'oxyde d'éthylène à une température de 80 à 130 °C et à une pression de 0,5 à 6,0 bar,
D) la mise en réaction avec, par rapport à l'alcool alkylique, 0 à 10 moles d'oxyde de propylène à une température de 80 à 130 °C et à une pression de 0,5 à 6,0 bar,
E) la mise en réaction avec, par rapport à l'alcool alkylique, 0 à 10 moles d'oxyde de butylène à une température de 80 à 130 °C et à une pression de 0,5 à 6,0 bar,
F) la mise en réaction avec, par rapport à l'alcool alkylique, 0,1 à 1,0 mole d'acide polyphosphorique P₄O₁₀ à une température de 50 à 110 °C et à une pression de 0,4 à 1,2 bar, et éventuellement
H) la purification de l'ester de l'acide phosphorique obtenu.

6. Procédé selon la revendication 5, **caractérisé en ce que** le procédé est réalisé en mode anhydre.

7. Procédé selon la revendication 5 ou 6, **caractérisé en ce que** le procédé est réalisé sans solvant.

8. Formulation de nettoyage et/ou de soin contenant des esters de l'acide phosphorique de formule générale 1a et/ou leurs sels 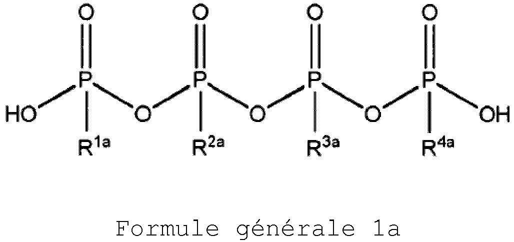 avec R^{1a}, R^{2a}, R^{3a} et R^{4a}, identiques ou différents, choisis parmi R-O-(SO)ₐₐ-(EO)_{bb}-(PO)_{cc}-(BO)_{dd}- et OH, avec
SO = 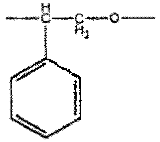
EO = -CH₂-CH₂-O-,
PO = -CH(CH₃)-CH₂-O- et
BO = -CH(CH₂CH₃)-CH₂-O- et
à condition qu'au moins un, de préférence au moins 2, notamment 3, de manière particulièrement préférée 4, des radicaux R^{1a}, R^{2a}, R^{3a} et R^{4a} soient différents d'OH,
avec
aa = 1 à 20, de préférence 2,5 à 7, de manière particulièrement préférée 3 à 4,
bb = 1 à 100, de préférence 4 à 15, de manière particulièrement préférée 8 à 12,
cc = 0 à 10, notamment 0,
dd = 0 à 10, notamment 0, et
R est choisi parmi les radicaux alkyle ramifiés ou linéaires, saturés ou insaturés, de 6 à 24 atomes de carbone.

9. Formulation selon la revendication 8, **caractérisée en ce qu'**elle contient au moins un composé de formule générale 1a en une quantité de 0,00001 % en poids à 2,5 % en poids, de manière particulièrement préférée de 0,1 % en poids à 1,2 % en poids, les % en poids se référant à la formulation totale.

10. Formulation aqueuse selon la revendication 8 ou 9, **caractérisée en ce qu'**elle contient au moins un tensioactif.

11. Formulation selon au moins l'une quelconque des revendications 8 à 10, **caractérisée en ce qu'**elle contient au moins un ester de l'acide phosphorique selon l'une quelconque des revendications 1 à 4 en tant qu'ester de l'acide phosphorique de formule générale 1a.

12. Utilisation d'au moins un ester de l'acide phosphorique de formule générale 1a et/ou son sel 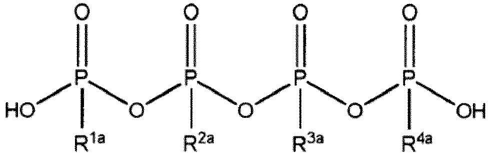 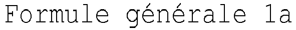 avec R^{1a}, R^{2a}, R^{3a} et R^{4a}, identiques ou différents, choisis parmi R-O-(SO)ₐₐ-(EO)_{bb}-(PO)_{cc}-(BO)_{dd}- et OH, avec
SO = 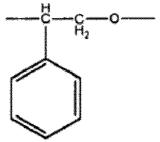 EO = -CH₂-CH₂-O-,
PO = -CH(CH₃)-CH₂-O- et
BO = -CH(CH₂CH₃)-CH₂-O- et
à condition qu'au moins un, de préférence au moins 2, notamment 3, de manière particulièrement préférée 4, des radicaux R^{1a}, R^{2a}, R^{3a} et R^{4a} soient différents d'OH,
avec
aa = 1 à 20,
bb = 1 à 100,
cc = 0 à 40, notamment 0,
dd = 0 à 20, notamment 0, et
R est choisi parmi les radicaux alkyle ramifiés ou linéaires, saturés ou insaturés, de 6 à 24 atomes de carbone,
ou d'au moins un ester de l'acide phosphorique selon l'une quelconque des revendications 1 à 4,
ou d'une formulation selon au moins l'une quelconque des revendications 8 à 11,
pour la génération d'une brillance sur une surface.
